# EUROPEAN PATENT APPLICATION

(11) **EP 4 459 162 A1**
(43) Date of publication of application: **06.11.2024**
(21) Application number: 23171075.7
(22) Date of filing: 02.05.2023
(51) Int. Cl.: F16K 3/314, F16K 11/074, A47L 15/00, D06F 39/08, D06F 39/02

(54) **MULTIWAY VALVE, WATER-BEARING HOUSEHOLD DEVICE CONTAINING THE VALVE AND PROCESS FOR OPERATING THE HOUSEHOLD DEVICE**

(71) Applicant: BSH Hausgeräte GmbH, 81739 München (DE)
(72) Inventor: Baran, Marcin, 95-080 Tuszyn (PL); Definski, Michal, 95-080 Tuszyn (PL)

(57) **Abstract**

The invention relates to a multiway valve 1 having a valve body 2 containing a rotatable hydraulic part 3 on an upper side of a stationary bottom plate 4, and a drive unit 5 for rotating the rotatable hydraulic part 3, wherein the stationary bottom plate 4 has a central opening for a central inlet 7 of an aqueous liquid and at least one peripheral opening 8, and wherein the rotatable hydraulic part 3 comprises a rotating plate with at least one opening above which a bent water guiding part 14 protrudes that is adapted to fluidly connect the central opening with at least one peripheral opening 8 such that the aqueous liquid arriving through the central inlet 7 flows in an opposite direction through the at least one peripheral opening 8. The invention also relates to a water-bearing household device comprising the multiway valve 1 and a process for operating this water-bearing household device.

## Description

The invention relates to a multiway valve and a water-bearing household device containing the multiway valve, and to a process for operating the water-bearing household device.

Multiway valves are often used to allow directing a received liquid into at least two different channels. To this end, a central space is usually provided for an incoming liquid to be distributed. The multiway valve then allows to direct the liquid to selected outlets. There are known valve solutions like rotary valves with one inlet at a side and few outlets at circumference used in dishwashers, valves consisting of two way valves connected in chain used in tumble dryers or multiway solenoid valves. Valve inlets and outlets are connected with other parts of the water systems by using hoses.

The publications EP 2 783 142 B1 and US 2015/158058 A describe an apparatus with a plurality of inlet ports and an outlet port, wherein the inlet ports are respectively connectable to a material supply container, and wherein a valve body having a throughgoing passage is provided that is displaceable relative to the inlet ports to provide a switchable connection between a respective one of the plurality of inlet ports and the outlet port, wherein the passage can be brought into a communicative connection selectively with a respective one of the various inlet ports to enable feeding of different materials successively to the outlet port, wherein at least one of the inlet ports is constituted as a flushing medium inlet port of a flushing device, and that the passage can be brought into a communicative connection with the flushing medium inlet port by a displacement of the valve body for the purpose of flushing of the passage.

In view of this situation it was an object of the present invention to provide an improved multiway valve and a water-bearing household device containing the improved multiway valve. Preferably, the multiway valve should decrease fluid flow resistance in comparison to known valves. And furthermore, the multiway valve should preferably allow a simplified assembly.

This object is achieved according to the present invention by the multiway valve, the water-bearing household device and the process for operating a water-bearing household device pursuant to the independent claims. Preferred embodiments of the multiway valve, the water-bearing household device and the process for its operation are indicated in the dependent claims. Preferred embodiments of the multiway valve correspond to preferred embodiments of the water-bearing household device and the process for operating the water-bearing household device and vice versa, even if not expressly stated herein.

The invention is thus directed to a multiway valve having a valve body containing a rotatable hydraulic part on an upper side of a stationary bottom plate, and a drive unit for rotating the rotatable hydraulic part, wherein the stationary bottom plate has a central opening for a central inlet of an aqueous liquid and at least one peripheral opening, and wherein the rotatable hydraulic part is a rotating plate with at least one opening above which a bent water guiding part protrudes that is adapted to fluidly connect the central opening with at least one peripheral opening such that the aqueous liquid arriving through the central inlet flows in an opposite direction through the at least one peripheral opening.

The drive unit contains in general an electric motor and a rotating shaft that is in general connected to the rotatable hydraulic part, in particular the bent water guiding part.

In a preferred embodiment, the multiway valve comprises at least two, preferably three or more, in particular four or five, peripheral openings.

It is preferred in the multiway valve of the present invention that the peripheral openings are arranged at the same distance from each other, although the distances can optionally also vary. Moreover, it is preferred that the openings have each a circular cross-section.

In a preferred embodiment of the multiway valve, the central opening and the at least one peripheral opening are placed on one flat surface. This enables an easier connection of the valve to other parts of the water system. The outlets can be connected with corresponding part in one assembly step without use of hoses.

In the multiway valve of the present invention it is moreover preferred that the sealing interface is provided around the at least one peripheral opening to allow a tight connection to a water distribution system. Preferably, the sealing interface contains one or more o-rings or flat seals. Placing all outlets on one surface simplifies assembly of valve as it makes connection of the hoses unnecessary because outlets are placed directly at inlets of corresponding part and sealed with o-rings or flat seal.

An inner surface of the bent water guiding part has the shape of a semi-sphere. The bent water guiding part can be a structure that is hollow in its entirety or it can be for example a bent tube that directly connects the central opening with at least one peripheral opening.

The invention is moreover directed to a water-bearing household device comprising a multiway valve as defined above. The water-bearing household device is preferably a laundry treating device or a dishwasher.

A water-bearing household device if preferred, wherein each peripheral opening is the opening to a corresponding outlet that is adapted to connect it without the use of hoses to a water distribution system.

The invention is moreover directed to a process for operating a water-bearing household device, comprising a multiway valve as defined above, wherein the process comprises the steps
(a) rotating the rotatable hydraulic part to fluidly connect the central opening through the bent water guiding part with at least one peripheral opening; and
(b) introducing the aqueous liquid into the central inlet and guiding it through the bent water guiding part to the at least one peripheral opening.

The present invention provides several advantages. Advantages of the invention include a decreased fluid flow resistance in comparison to known valves. Moreover, the assembly is easier because of the arrangement of the openings, especially in embodiments wherein a central inlet is connected with one of axially, symmetrically placed outlets.

The invention will be illustrated in the following by making reference to the following
Figures 1 to 8 which show a non-limiting example for a multiway-valve of the present invention and its important parts.
Fig. 1 shows a perspective view on an exemplary multiway-valve connected to a water distribution system.
Fig. 2 shows a perspective exploded view on the exemplary multiway-valve of Fig. 1.
Fig. 3 shows a cut view of the exploded view of Fig. 2 on the exemplary multiway-valve of Fig. 1.
Fig. 4 shows a cut view of the multiway-valve which illustrates especially the rotatable hydraulic part and its function.
Fig. 5 shows the rotatable hydraulic part used in an embodiment of the multiway-valve of the present invention. (a) is a cut side view; (b) is a bottom view; and (c) is a top view.
Fig. 6 shows perspective views of the rotatable hydraulic part shown in Fig. 5. (a) is a view from oblique above; and (b) is a view from oblique below.
Fig. 7 shows a view from the bottom, wherein the sealing interfaces around the peripheral openings can be seen.

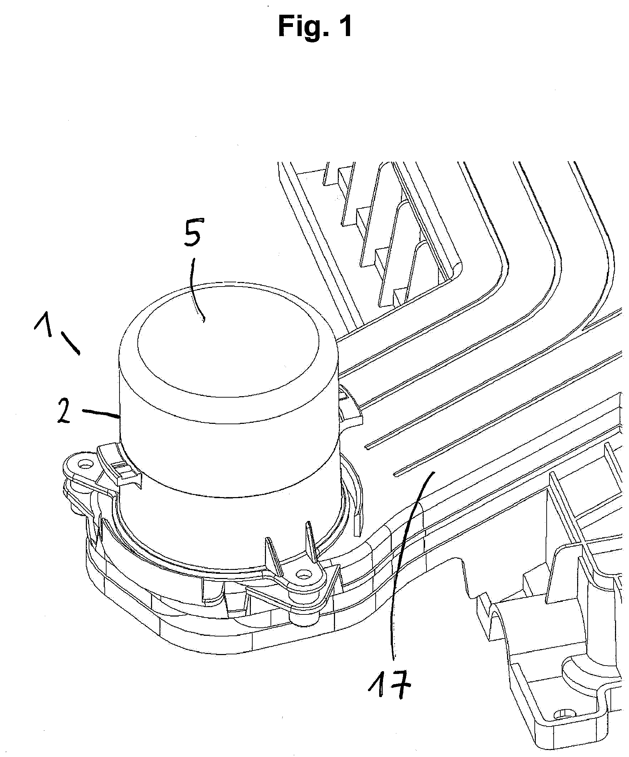

Fig. 1 shows a perspective view on an exemplary multiway-valve 1 connected to a water distribution system 17 of which channels to parts thereof can be seen here. 5 indicates the drive unit which contains here an electric motor. 2 indicates the valve body.

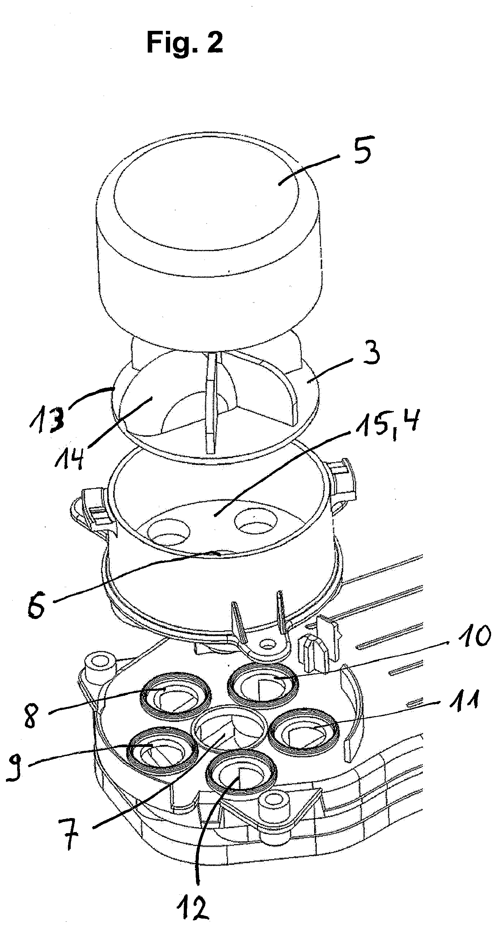

Fig. 2 shows a perspective exploded view on the exemplary multiway-valve of Fig. 1. 5 indicates the drive unit which contains here an electric motor. 3 refers to the rotatable hydraulic part which is a rotating plate 13 upon which a bent water guiding part 14 protrudes. In a stationary bottom plate 4 a central opening 6 can be seen which is surrounded by peripheral openings 8 to 11. In the lower part of Fig. 2 o-rings as sealing devices are placed around the peripheral openings 8 to 11.

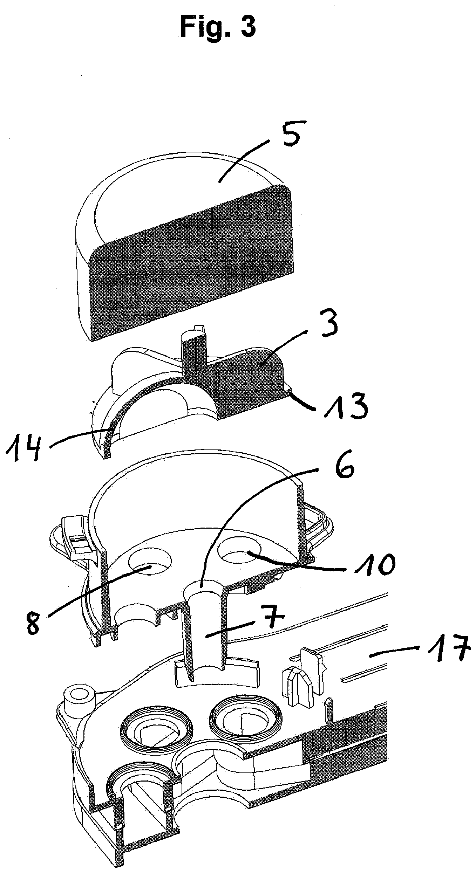

Fig. 3 shows a cut view of the exploded view of Fig. 2 on the exemplary multiway-valve of Fig. 1. 5 indicates the drive unit which contains here an electric motor. 3 refers to the rotatable hydraulic part which is a rotating plate 13 upon which a bent water guiding part 14 protrudes. In a stationary bottom plate 4 a central opening 6 can be seen which is surrounded by peripheral openings 8 and 10. In the lower part of Fig. 3 o-rings as sealing devices are placed around the peripheral openings.

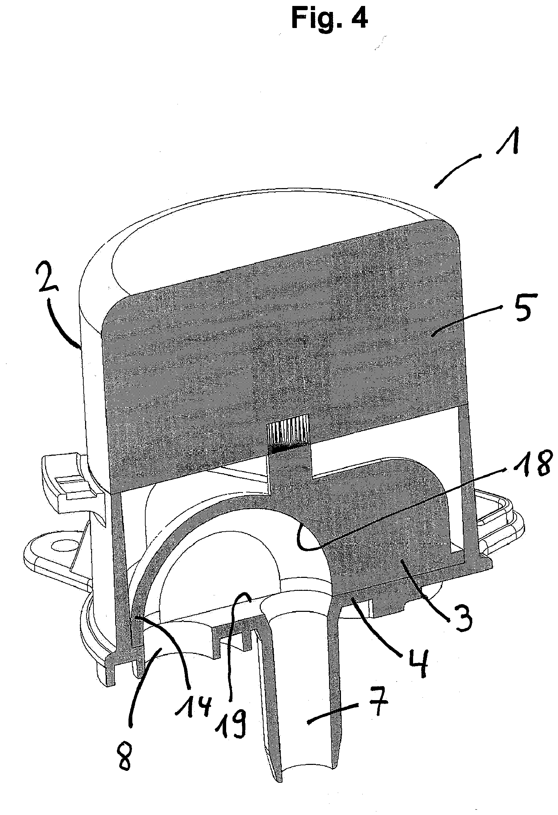

Fig. 4 shows a cut view of a multiway-valve 1 which illustrates especially the rotatable hydraulic part 3 and its function. The rotatable hydraulic part 3 contains a bent water guiding part 14 with an inner surface 18 that has a spherical shape. The bent water guiding part 14 connects a central inlet 7 with a peripheral opening 8. 4 refers to a stationary bottom plate of the multiway valve, and 19 to one flat surface 19 containing the holes of the central inlet 7 and the peripheral opening 8. 5 indicates the drive unit which contains here an electric motor. 2 indicates the valve body.

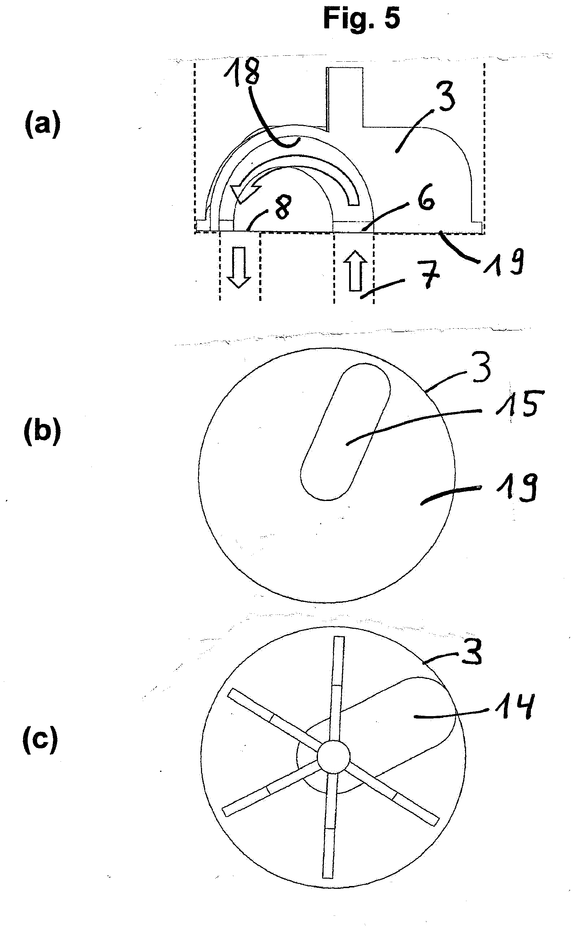

Fig. 5 shows the rotatable hydraulic part 3 used in an embodiment of the multiway-valve of the present invention. (a) is a cut side view; (b) is a bottom view; and (c) is a top view.

As can be seen from Fig. 5 (a), the bent water guiding part with an inner surface 18 connects a central inlet 7 with a peripheral opening 8. 19 indicates one flat surface containing the hole 6 of the central inlet 7 and the peripheral opening 8. The open arrows indicate the flow direction of an aqueous liquid.

In Fig. 5 (b) the multiway-valve is seen from below through. 19 indicates one flat surface containing the hole of the central inlet and the peripheral opening. These cannot be seen here since they are covered by the opening 15 of the bent water guiding part.

Fig. 5 (c) is a top view wherein the bent water guiding part 14 of the rotatable hydraulic part 3 can be seen.

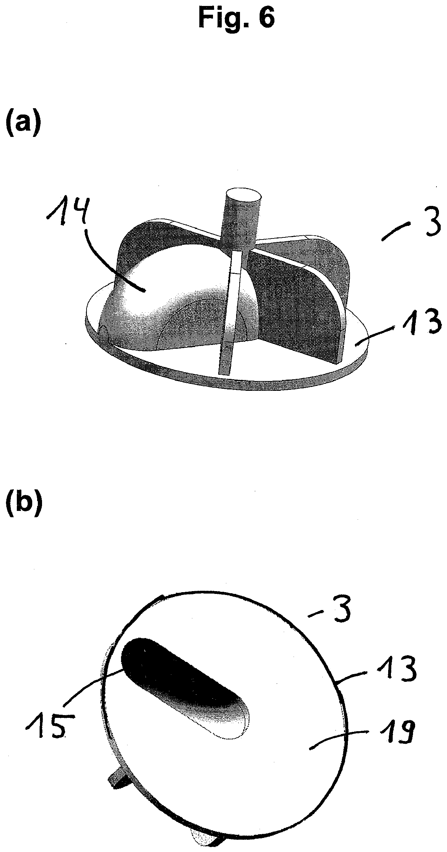

Fig. 6 shows perspective views of the rotatable hydraulic part 3 shown in Fig. 5. (a) is a view from oblique above; and (b) is a view from oblique below. 13 is a rotating plate and 14 the bent water guiding part. 15 refers to the opening 15 of the bent water guiding part and 19 indicates one flat surface.

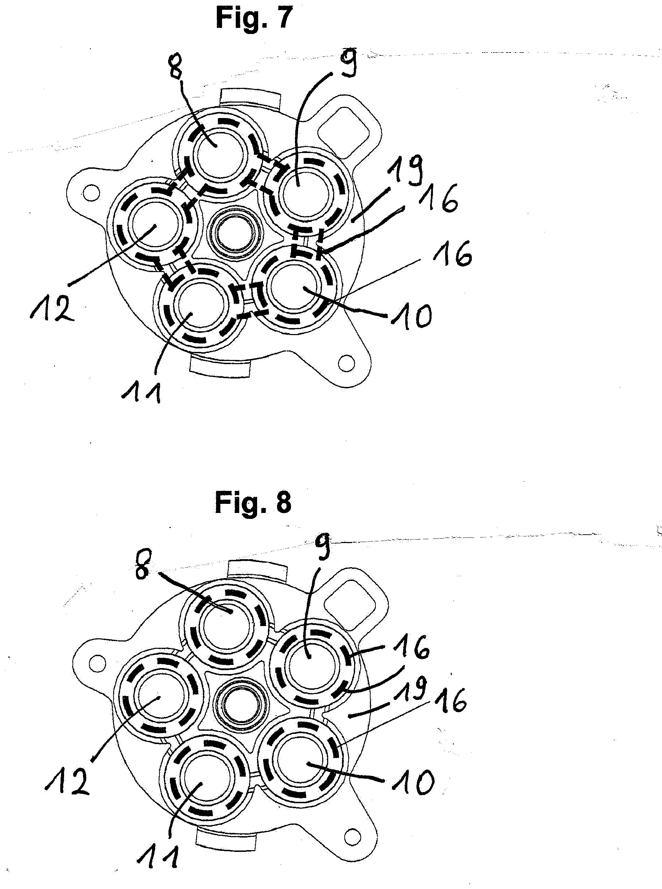

Fig. 7 shows a view from the bottom, wherein the sealing interfaces 16 around the peripheral openings 8 to 12 can be seen. 19 indicates one flat surface containing the hole of the central inlet and the peripheral openings 8 to 12.

### LIST OF REFERENCE NUMERALS

- 1: Multiway valve
- 2: Valve body
- 3: Rotatable hydraulic part
- 4: Stationary bottom plate
- 5: Drive unit (for rotating the rotatable hydraulic part)
- 6: Central opening
- 7: Central inlet
- 8: Peripheral opening
- 9: Peripheral opening
- 10: Peripheral opening
- 11: Peripheral opening
- 12: Peripheral opening
- 13: Rotating plate
- 14: Bent water guiding part
- 15: Opening in rotating plate
- 16: Sealing interface
- 17: Water distribution system
- 18: Inner surface (of bent water guiding part)
- 19: One flat surface (containing the central and the peripheral opening)

## Claims

1. Multiway valve (1) having a valve body (2) containing a rotatable hydraulic part (3) on an upper side (15) of a stationary bottom plate (4), and a drive unit (5) for rotating the rotatable hydraulic part (3), wherein the stationary bottom plate (4) has a central opening (6) for a central inlet (7) of an aqueous liquid and at least one peripheral opening (8,9,10,11,12), and wherein the rotatable hydraulic part (3) is a rotating plate (13) with at least one opening (15) above which a bent water guiding part (14) protrudes that is adapted to fluidly connect the central opening (6) with at least one peripheral opening (8,9,10,11,12) such that the aqueous liquid arriving through the central inlet (7) flows in an opposite direction through the at least one peripheral opening (8,9,10,11,12).

2. Multiway valve (1) according to claim 1, wherein the multiway valve (1) comprises at least two, preferably three or more 3, peripheral openings (8,9,10,11,12).

3. Multiway valve (1) according to claim 2, wherein the peripheral openings (8,9,10,11,12) are arranged at the same distance from each other.

4. Multiway valve (1) according to any of claims 1 to 3, wherein the openings (6-12) have each a circular cross-section.

5. Multiway valve (1) according to any of claims 1 to 4, wherein a sealing interface (16) is provided around the at least one peripheral opening (8,9,10,11,12) to allow a tight connection to a water distribution system (17).

6. Multiway valve (1) according to claim 5, wherein the sealing interface (16) contains one or more o-rings (17) or flat seals.

7. Multiway valve (1) according to any of claims 1 to 6, wherein an inner surface (18) of the bent water guiding part (14) has the shape of a semi-sphere.

8. Multiway valve (1) according to any of claims 1 to 7, wherein the central opening (6) and the at least one peripheral opening (8,9,10,11,12) are placed on one flat surface (19).

9. Water-bearing household device, comprising a multiway valve (1) as defined in claims 1 to 8.

10. Water-bearing household device according to claim 9, wherein each peripheral opening (8,9,10,11,12) is the opening to a corresponding outlet that is adapted to connect it without the use of hoses to a water distribution system (17).

11. Process for operating a water-bearing household device, comprising a multiway valve (1) as defined in any of claims 1 to 8, wherein the process comprises the steps
(a) rotating the rotatable hydraulic part (3) to fluidly connect the central opening (6) through the bent water guiding part (14) with at least one peripheral opening (8,9,10,11,12); and
(b) introducing the aqueous liquid into the central inlet (7) and guiding it through the bent water guiding part (14) to the at least one peripheral opening (8,9,10,11,12).
